(19) Europäisches Patentamt
European Patent Office
Office européen des brevets

(11) **EP 3 084 406 B1**

(12) **FASCICULE DE BREVET EUROPEEN**

(45) Date de publication et mention de la délivrance du brevet:
**10.01.2018 Bulletin 2018/02**

(21) Numéro de dépôt: **14821527.0**

(22) Date de dépôt: **09.12.2014**

(51) Int Cl.:
***G01N 23/087*** *(2018.01)*

(86) Numéro de dépôt international:
**PCT/EP2014/076960**

(87) Numéro de publication internationale:
**WO 2015/091083 (25.06.2015 Gazette 2015/25)**

(54) **MÉTHODE DE MESURE DU NUMÉRO ATOMIQUE EFFECTIF D'UN MATÉRIAU**

VERFAHREN ZUR MESSUNG DER EFFEKTIVEN ATOMZAHL EINES MATERIALS

METHOD FOR MEASURING THE EFFECTIVE ATOMIC NUMBER OF A MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2013 FR 1363174**

(43) Date de publication de la demande:
**26.10.2016 Bulletin 2016/43**

(73) Titulaire: **Commissariat à l'Énergie Atomique et aux Énergies Alternatives 75015 Paris (FR)**

(72) Inventeurs:
• **GORECKI, Alexia**
  **38000 Grenoble (FR)**
• **RINKEL, Jean**
  **F-91440 Bures-sur-Yvette (FR)**

(74) Mandataire: **Brevalex**
**56, Boulevard de l'Embouchure**
**B.P. 27519**
**31075 Toulouse Cedex 2 (FR)**

(56) Documents cités:
**FR-A1- 2 961 904        US-A- 6 069 936**
**US-A1- 2003 147 489**

• **RYZHIKOV V D ET AL: "A spectrometric approach in radiography for detection of materials by their effective atomic number", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, vol. 603, no. 3, 21 mai 2009 (2009-05-21), pages 349-354, XP026097538, ISSN: 0168-9002, DOI: 10.1016/J.NIMA.2009.02.006 [extrait le 2009-02-13]**

EP 3 084 406 B1

**Description**

**DOMAINE TECHNIQUE**

La présente invention concerne le domaine de la caractérisation physique d'un matériau et plus particulièrement celui de la mesure de son numéro atomique effectif par spectroscopie X ou gamma. Elle trouve notamment à s'appliquer dans le domaine de l'imagerie médicale et du contrôle non destructif.

**ÉTAT DE LA TECHNIQUE ANTÉRIEURE**

Le numéro atomique effectif fait partie des paramètres pouvant caractériser un matériau. On rappelle que le numéro atomique d'un corps simple est défini comme le nombre de protons présents dans le noyau d'un atome de ce corps. En revanche, lorsque l'on considère un composé chimique, on doit faire appel à la notion de numéro atomique effectif. Celui-ci est défini comme le numéro atomique d'un corps simple qui conduirait au même spectre de transmission dans une bande d'énergie donnée. De manière générale, le numéro atomique effectif d'un composé chimique est obtenu au moyen d'une combinaison des numéros atomiques des numéros atomiques des corps simples constitutifs du composé, chaque numéro atomique étant affecté d'un coefficient de pondération dépendant de la fraction massique ou atomique du corps simple dans le composé. Ainsi, en pratique, le numéro atomique effectif $Z_{eff}$ d'un composé de $N$

$$Z_{eff} = \left( \sum_{i=1}^{N} \eta_i \left( Z_{eff}^i \right)^p \right)^{1/p}$$

corps simple, vérifie où $Z_{eff}^i$ est le numéro atomique du corps simple $i = 1,..., N$ et $p$ est une constante relié à l'effet photoélectrique ($p = 4,62$).

La mesure du numéro atomique effectif d'un matériau est classiquement réalisée à l'aide d'une spectrométrie par rayons X ou par rayons gamma. On utilise généralement pour ce faire des capteurs spectrométriques à conversion directe, c'est-à-dire des capteurs dans lesquels les photons X ou gamma ayant interagi avec le matériau à analyser sont absorbés par un élément semi-conducteur (CdTe par exemple). Plus précisément, un photon incident sur cet élément y crée un nuage de charges électroniques (typiquement 10000 électrons pour un photon X de 60 keV). Ces charges sont ensuite recueillies par des électrodes de collecte disposées sur cet élément. Les charges générées par un photon incident et ainsi collectées forment un signal électrique transitoire de forme impulsionnelle. Si la collecte des charges est complète, l'intégrale de l'impulsion mesurée est proportionnelle à l'énergie du photon incident. L'histogramme des énergies ainsi mesurées donne un spectre du rayonnement ayant interagi avec le matériau. Ce spectre fournit des informations sur la densité ainsi que la nature du matériau, et permet d'en estimer le numéro atomique effectif.

Une méthode de mesure du numéro atomique effectif d'un matériau est décrite dans le brevet US-A-6069936. Elle consiste à irradier le matériau avec un premier rayonnement possédant un premier spectre d'énergie pour obtenir un premier profil d'atténuation, puis avec un second rayonnement possédant un second spectre d'énergie pour obtenir un second profil d'atténuation, et de déterminer le numéro atomique effectif du matériau à partir d'un rapport entre les premier et second profils ainsi obtenus. Le premier spectre d'énergie peut correspondre à une gamme d'énergie élevée et le second spectre d'énergie peut correspondre à une gamme d'énergie plus faible. Le numéro atomique effectif est déterminé à partir d'une table dans laquelle ont été stockés lors d'une phase de calibration des rapports de profil pour des matériaux de numéros atomiques connus. FR2961904 décrit une autre méthode d'identification d'un matériau utilisant une fonction de vraisemblance à partir d'un spectre de transmission d'un échantillon et une pluralité de spectres de calibration. Ces méthodes ne permettent cependant pas de déterminer le numéro atomique d'un matériau avec un degré de précision et de fiabilité satisfaisant.

L'objet de la présente invention est par conséquent de proposer une méthode de mesure du numéro atomique effectif d'un matériau qui soit à la fois fiable et précise.

**EXPOSÉ DE L'INVENTION**

L'invention concerne une méthode de mesure du numéro atomique effectif d'un matériau pour une bande spectrale X ou gamma prédéterminée, dans laquelle :

on mesure un spectre de transmission $\left( \mathbf{S^a} = \left( n_1^a, n_2^a, ..., n_N^a \right)^T \right)$ d'un échantillon dudit matériau dans une pluralité ($N$) de canaux d'énergie de ladite bande spectrale ;

on calcule une fonction de vraisemblance du numéro atomique effectif et de l'épaisseur de l'échantillon dudit matériau à partir du spectre de transmission ainsi mesuré et d'une pluralité de spectres de transmission $\left( \mathbf{S^c}(Z_p^c, e_q^c) \right)$, dits spectres de calibration, obtenus pour une pluralité d'échantillons de matériaux de calibration ayant des nombres atomiques effectifs connus et des épaisseurs connues,
on interpole les spectres de calibration pour obtenir un spectre de calibration interpolé pour chaque numéro atomique effectif appartenant à un premier intervalle ($[Z_{min}, Z_{max}]$), et l'on calcule pour chaque numéro atomique effectif appartenant à cet intervalle et chaque épaisseur donnée, une valeur de ladite fonction de vraisemblance. on estime le numéro atomique effectif ($Z$) dudit matériau à partir des valeurs de la fonction de vraisemblance ainsi obtenues.

De la même façon, on peut avantageusement interpoler les spectres de calibration pour obtenir un spectre de calibration interpolé pour chaque numéro atomique effectif appartenant à un second intervalle ($[e_{min}, e_{max}]$) et calculer pour chaque épaisseur appartenant à cet intervalle et chaque numéro atomique effectif donné, une valeur de ladite fonction de vraisemblance.

Selon un second mode de réalisation, on effectue, pour chaque matériau de calibration ($p$) de numéro atomique effectif connu $(Z_p^c)$, une interpolation entre les spectres de calibration relatifs à des épaisseurs connues afin de déterminer un spectre de calibration interpolé pour chaque épaisseur d'un intervalle d'épaisseur donné ($[e_{min}, e_{max}x]$), la fonction de vraisemblance étant évaluée sur cet intervalle d'épaisseur à partir du spectre de calibration interpolé, et que l'on détermine la valeur maximale de la fonction de vraisemblance sur ledit intervalle d'épaisseur, ladite valeur maximale étant associée au matériau.

Selon le second mode de réalisation, le numéro atomique effectif ($\hat{Z}$) du matériau peut être estimé comme la moyenne de numéros atomiques effectifs appartenant à un premier intervalle ($[Z_{min}, Z_{max}]$), pondérés par les valeurs maximales de la fonction de vraisemblance qui leur sont respectivement associées.

Selon le second mode de réalisation, on peut alternativement effectuer, pour chaque matériau de calibration ($p$) de numéro atomique effectif connu $(Z_p^c)$, une interpolation entre les spectres de calibration relatifs à des épaisseurs connues afin de déterminer un spectre de calibration interpolé pour chaque épaisseur d'un intervalle d'épaisseur donné ($[e_{min}, e_{max}]$), la fonction de vraisemblance étant évaluée sur cet intervalle d'épaisseur à partir du spectre de calibration interpolé, puis intégrée sur cet intervalle d'épaisseur pour donner une valeur de fonction de vraisemblance marginale associée à ce matériau de calibration.

Dans tous les cas, les valeurs de la fonction de vraisemblance peuvent être déterminées pour chaque couple $(Z_p^c, e_q^c)$ de numéro atomique effectif et d'épaisseur par :

$$\mathrm{V}(Z_p^c, e_q^c) = \frac{1}{\displaystyle\prod_{i=1}^{N} n_i^c} \exp\left[-\sum_{i=1}^{N} \frac{\left(\mu_i n_i^a - n_i^c\right)^2}{2\left(n_i^c\right)^2}\right]$$

où les $n_i^a$, $i = 1, ..., N$ sont les valeurs du spectre de transmission du matériau dans les différents canaux, $n_i^c$, $i = 1, ...., N$ sont les valeurs du spectre de transmission du matériau de calibration dans ces mêmes canaux et $\mu_i$ est le rapport entre le nombre de photons reçus dans le canal i en absence de matériau lors de la calibration $(n_{0,i}^c)$ et le nombre de photons reçus en absence de matériau lors de la mesure $(n_{0,i}^a)$ dans le même canal.

Avantageusement, selon le second mode de réalisation, pour chaque couple $(Z,e)$ de numéro atomique effectif appartenant à un premier intervalle et d'épaisseur appartenant à un second intervalle, on calcule la fonction de vraisemblance $V(Z,e)$ à partir de :

$$\ln\left(\mathrm{V}(Z,e)\right) = -\mu \overline{n}^c + \sum_{i=1}^{N} n_i^a \ln\left(\mu n_i^c\right)$$

où les $n_i^a$, $i = 1, ..., N$ sont les valeurs du spectre de transmission du matériau dans les différents canaux, $n_i^c$, $i = 1, ...., N$ sont les valeurs du spectre de transmission interpolé dans ces mêmes canaux, $\mu$ est le rapport entre le nombre total de photons reçus dans l'ensemble de canaux et en absence de matériau lors de la mesure et le nombre total de photons reçus dans le même ensemble de canaux et en absence de matériau lors de la calibration, et $\overline{n}_c$ est le nombre total de photons reçus dans le même ensemble de canaux en présence du matériau de calibration, lors de la calibration.

Le numéro atomique du matériau peut alors être estimé comme celui $(\hat{Z}_{ML})$ qui maximise la fonction de vraisemblance V($Z,e$) sur le pavé constitué par le produit cartésien entre le premier intervalle et le second intervalle.

Alternativement, on peut déterminer la densité marginale ($p(Z)$) de la fonction de vraisemblance sur ledit premier intervalle, en intégrant la densité de la fonction de vraisemblance sur le second intervalle.

Le numéro atomique effectif du matériau peut alors être estimé comme celui $(\hat{Z}_{marg})$ maximisant la densité marginale sur ledit premier intervalle. Alternativement, le numéro atomique effectif du matériau peut être estimé comme la moyenne du numéro effectif ($Z_{moy}$) pondéré par la densité marginale de la fonction de vraisemblance sur ledit premier intervalle.

Avantageusement, selon le second mode de réalisation, pour une épaisseur $e$ comprise entre une première épaisseur connue $e_q^c$ et une seconde épaisseur connue $e_{q+1}^c$ où $e_q^c < e < e_{q+1}^c$, on obtient un spectre de calibration interpolé $S^c(Z^c,e)$ pour le numéro atomique effectif $Z^c$ et l'épaisseur $e$ à partir des spectres de calibration $\mathbf{S}^c\left(Z^c,e_q^c\right)$ et $\mathbf{S}^c\left(Z^c,e_{q+1}^c\right)$ respectivement obtenus pour le même numéro atomique effectif et les épaisseurs respectives $e_q^c$ et $e_{q+1}^c$, au moyen de :

$$\ln\left[n_i^c\left(Z^c,e\right)\right] = \left(\frac{e_{q+1}^c - e}{e_{q+1}^c - e_q^c}\right)\ln\left[n_i^c\left(Z^c,e_q^c\right)\right] + \left(\frac{e - e_q^c}{e_{q+1}^c - e_q^c}\right)\ln\left[n_i^c\left(Z^c,e_{q+1}^c\right)\right]$$

où $n_i^c\left(Z^c,e\right)$, $n_i^c\left(Z^c,e_q^c\right)$ et $n_i^c\left(Z^c,e_{q+1}^c\right)$ sont les valeurs respectives des spectres $S^c(Z^c,e)$, $\mathbf{S}^c\left(Z^c,e_q^c\right)$ et $\mathbf{S}^c\left(Z^c,e_{q+1}^c\right)$ dans le canal $i$ de la bande spectrale.

De manière similaire, pour un numéro atomique effectif $Z$ compris entre un premier numéro atomique effectif connu $Z_p^c$ et un second numéro atomique effectif connu $Z_{p+1}^c$ où $Z_p^c < Z < Z_{p+1}^c$, on obtient avantageusement un spectre de calibration interpolé $S^c(Z,e^c)$ pour le numéro atomique effectif $Z$ et l'épaisseur $e^c$ à partir des spectres de calibration $\mathbf{S}^c\left(Z_p^c,e^c\right)$ et $\mathbf{S}^c\left(Z_{p+1}^c,e^c\right)$ respectivement obtenus pour la même épaisseur $e^c$ et les nombres atomiques respectifs $Z_p^c$ et $Z_{p+1}^c$, au moyen de :

$$\ln\left[n_i^c\left(Z,e^c\right)\right] = \left(1 - \gamma_p^1\frac{\rho}{\rho_p} - \gamma_p^2\frac{\rho}{\rho_{p+1}}\right)\ln\left[n_{0,i}^c\right] +$$
$$\left(\gamma_p^1\frac{\rho}{\rho_p}\right)\ln\left[n_i^c\left(Z_p^c,e^c\right)\right] + \left(\gamma_p^2\frac{\rho}{\rho_{p+1}}\right)\ln\left[n_i^c\left(Z_{p+1}^c,e^c\right)\right]$$

où $n_i^c\left(Z,e^c\right)$ $n_i^c\left(Z_p^c,e^c\right)$, $n_i^c\left(Z_{p+1}^c,e^c\right)$ sont les valeurs respectives des spectres $S^c(Z,e^c)$, $\mathbf{S}^c\left(Z_p^c,e^c\right)$ et $\mathbf{S}^c\left(Z_{p+1}^c,e^c\right)$ dans le canal $i$ de la bande spectrale, $n_{0,i}^c$ est le score du spectre de plein flux dans le canal $i$,

$$\gamma_p^1 = \frac{\left(Z_{p+1}^c\right)^r - Z^r}{\left(Z_{p+1}^c\right)^r - \left(Z_p^c\right)^r} \quad \gamma_p^2 = \frac{Z^r - \left(Z_p^c\right)^r}{\left(Z_{p+1}^c\right)^r - \left(Z_p^c\right)^r},$$

$r$ est une constante réelle prédéterminée, $\rho_p,\rho_{p+1}$ sont respectivement les densités des matériaux $p$ et $p+1$, et où $\rho$ est la densité du matériau de nombre atomique $Z$ obtenue par interpolation entre les densités $\rho_p$ et $\rho_{p+1}$.

## BRÈVE DESCRIPTION DES DESSINS

D'autres caractéristiques et avantages de l'invention apparaîtront à la lecture de modes de réalisation préférentiels de l'invention, en référence aux figures jointes parmi lesquelles :

La Fig. 1 représente schématiquement un ordinogramme d'une méthode de mesure selon un premier mode de réalisation de l'invention ;
La Fig. 2 représente schématiquement un ordinogramme d'une méthode de mesure selon un second mode de réalisation de l'invention ;
La Fig. 3A représente la fonction de vraisemblance du numéro atomique effectif et de l'épaisseur pour un échantillon, la Fig. 3B représente la fonction de vraisemblance marginale correspondante en fonction du numéro atomique effectif, et la Fig. 3C représente la fonction de vraisemblance marginale en fonction de l'épaisseur.

## EXPOSÉ DÉTAILLÉ DE MODES DE RÉALISATION PARTICULIERS

Nous considérerons dans la suite un matériau dont on souhaite mesurer le numéro atomique effectif à l'aide de mesures de spectrométrie en transmission X ou gamma. On pourra utiliser à cet effet un spectromètre à conversion directe tel que mentionné dans l'introduction.

On supposera que la mesure de numéro atomique est réalisée dans une zone homogène du matériau, soit que le matériau soit lui-même homogène, soit que le faisceau X ou gamma soit suffisamment fin pour que l'on puisse considérer la zone irradiée comme homogène. On comprendra notamment que l'on pourra balayer un objet avec un faisceau de manière à effectuer une mesure en chaque point et ainsi réaliser une cartographie de numéro atomique effectif.

La mesure de spectrométrie en transmission, désignée ci-après plus simplement spectre de transmission, est

$$\mathbf{S^a} = \left( n_1^a, n_2^a, ..., n_N^a \right)^T$$

représentée par un vecteur où $N$ est le nombre de canaux d'énergie (dites encore canaux de détection), chaque valeur $n_i^a$ étant représentative du nombre d'impulsions observées dans le canal $i$ pendant un temps de mesure, $T$, donné. La valeur $n_i^a$ est encore appelée score du canal $i$ pendant le temps de mesure T. Le numéro atomique effectif du matériau est noté $Z_{eff}$ ou, plus simplement $Z$, et son estimation à partir de la mesure de spectrométrie, est notée $\hat{Z}$ .

On supposera que l'on a préalablement effectué une calibration de la mesure de $Z$ à l'aide d'une pluralité $PQ$ d'échantillons de matériaux différents $p = 1,...,P$ et d'épaisseurs différentes $e_1,...,e_Q$, dits échantillons de calibration (ou étalons). Nous supposerons, sans perte de généralité, que pour chaque matériau $p$ la calibration est effectuée pour la même pluralité $Q$ d'épaisseurs, autrement dit que l'on dispose, pour chaque matériau de calibration $p$, de $Q$ étalons d'épaisseurs différentes. Le numéro atomique effectif d'un échantillon de matériau $p$ et d'épaisseur $e_q$ est noté $Z_{p,q}^c$ .

L'idée à la base de l'invention est d'adopter une approche probabiliste en effectuant, à partir du spectre de transmission d'un échantillon, une estimation du numéro atomique effectif du matériau constitutif de l'échantillon, et le cas échéant de l'épaisseur de cet échantillon, selon un critère MAP (*Maximum A Posteriori*) ou selon un critère de maximum de vraisemblance, dit encore critère ML (*Maximum Likelihood*).

Plus précisément, la probabilité que l'échantillon analysé présente un numéro atomique effectif $Z$ et une épaisseur $e$, compte tenu du spectre de transmission $\mathbf{S^a}$ mesuré, est donnée par le théorème de Bayes :

$$\Pr(\theta | \mathbf{S^a}) \propto \Pr(\mathbf{S^a} | \theta) \Pr(\theta) \qquad (1)$$

où $\propto$ est le signe de proportionnalité (le terme $\Pr(\mathbf{S^a})$ figurant au dénominateur dans la formule de Bayes peut être omis car indépendant de $\theta$), $\Pr(x|y)$ représente la probabilité conditionnelle de $x$ sachant que $y$ est réalisé et où $\theta = (Z,e)$ est le couple constitué du numéro atomique effectif et de l'épaisseur du matériau.

Le critère d'estimation MAP est un critère optimal visant à rechercher le maximum de probabilité *a posteriori,* soit :

$$\hat{\theta}_{MAP} = \underset{\theta}{\arg\max} \left( \Pr(\theta | \mathbf{S^a}) \right) \qquad (2)$$

Si l'on suppose que la distribution de probabilité de $\theta$ est uniforme, autrement dit si tous les matériaux et toutes les épaisseurs de matériau à analyser sont équiprobables, Pr($\theta$) est une constante et l'on peut alors effectuer une estimation au sens du critère de maximum de vraisemblance, soit :

$$\hat{\theta}_{ML} = \underset{\theta}{\arg\max}\left(\Pr\left(\mathbf{S^a}\middle|\theta\right)\right) \qquad (3)$$

Pour un spectre de transmission $\mathbf{S^a}$ (observation) donné, la fonction V($\theta$)=Pr($\mathbf{S^a}|\theta$) est appelée fonction de vraisemblance de $\theta$. Le spectre de transmission $\mathbf{S^a}$ peut être considéré comme un vecteur aléatoire de dimension $N$ paramétré par $\theta$, autrement dit la loi de distribution de probabilité de $\mathbf{S^a}$ est paramétrée par $\theta$. V($\theta$) représente alors la vraisemblance (ou de manière abusive la probabilité) que le paramètre de la loi de distribution soit $\theta$, compte tenu de la réalisation $\mathbf{S^a}$ .

Si l'on suppose que les composantes du vecteur aléatoire $\mathbf{S^a}$ sont indépendantes, autrement dit que les scores dans les différents canaux du spectre sont des variables aléatoires indépendantes, la fonction de vraisemblance peut encore s'écrire :

$$V(\theta) = \prod_{i=1}^{N} \Pr\left(n_i^a\middle|\theta\right) \qquad (4)$$

Si l'on suppose en outre que le matériau analysé est l'un des matériaux de calibration, la fonction de vraisemblance est simplement donnée par :

$$V(Z^c, e^c) = \prod_{i=1}^{N} \Pr\left(n_i^a\middle|n_i^c(Z^c, e^c)\right) \qquad (5)$$

où $n_i^c(Z^c, e^c)$ désigne le score du canal $i$ dans la phase de calibration pour l'échantillon de numéro atomique effectif $Z^c$ et d'épaisseur $e^c$ .

Selon un premier mode de réalisation, on utilise une modélisation statistique du taux de transmission du matériau dans chaque canal d'énergie: lorsque le nombre $N$ de canaux est suffisamment grand (spectre finement discrétisé) et le temps $T$ de mesure suffisamment long, le taux de transmission dans chaque canal suit une loi de distribution gaussienne. On note alors $\alpha_i = \dfrac{n_i^a}{n_{0,i}^a}$ le coefficient de transmission du matériau dans le canal d'énergie $i$ lors de la mesure, où $n_{0,i}^a$ est le score du canal dans des conditions de plein flux, c'est-à-dire en absence du matériau et pour un même temps d'irradiation. De manière similaire, on note $\alpha_i^c = \dfrac{n_i^c}{n_{0,i}^c}$ le coefficient de transmission dans le canal d'énergie $i$ de l'échantillon lors de la phase de calibration. La probabilité Pr($\alpha_i$) du coefficient de transmission suit la loi gaussienne :

$$\Pr\left(\alpha_i\right) \propto \exp\frac{\left(\alpha_i - \alpha_i^c\right)^2}{2\sigma^2} \text{ avec } \sigma^2 = \left(\alpha_i^c\right)^2 \qquad (6)$$

et par conséquent la probabilité du score $n_i^a$ est donnée par :

$$\Pr\left(n_i^a\right) = \exp\frac{-\left(\mu_i n_i^a - n_i^c\right)^2}{2\left(n_i^c\right)^2} \text{ avec } \mu_i = \frac{n_{0,i}^c}{n_{0,i}^a} \qquad (7)$$

Le rapport $\mu_i$ exprime la dérive de l'ensemble source et détecteur entre l'instant de calibration et l'instant de la mesure. En absence de dérive, on a $\mu_i = 1$. On déduit des expressions (4) et (7) que :

$$V(Z^c, e^c) = \frac{1}{\prod\limits_{i=1}^{N} n_i^c} \exp\left[ -\sum_{i=1}^{N} \frac{\left(\mu_i n_i^a - n_i^c\right)^2}{2\left(n_i^c\right)^2} \right] \qquad (8)$$

De manière équivalente, la fonction de vraisemblance peut encore s'écrire à partir des coefficients de transmission sous la forme suivante:

$$V(Z^c, e^c) = \frac{1}{\prod\limits_{i=1}^{N} \alpha_i^c n_{0,i}^c} \exp\left[ -\sum_{i=1}^{N} \frac{1}{2}\left( \frac{\alpha_i - \alpha_i^c}{\alpha_i^c} \right)^2 \right] \qquad (8')$$

où l'on rappelle que le score $n_i^c$ dépend du numéro atomique effectif et de l'épaisseur de l'étalon. Pour cette raison, il sera également noté $n_i^c\left(Z_p^c, e_q^c\right)$. De manière similaire le coefficient de transmission $\alpha_i^c$ sera également noté $\alpha_i^c\left(Z_p^c, e_q^c\right)$.

Selon le premier mode de réalisation de l'invention, on détermine, pour chaque matériau de calibration, le maximum de la fonction de vraisemblance sur les différentes épaisseurs, soit la valeur de la fonction de vraisemblance :

$$V_p = \max_q \left( V\left(Z_p^c, e_q^c\right) \right) \qquad (9)$$

On estime alors le numéro atomique effectif du matériau à analyser en effectuant une moyenne des nombres atomiques effectifs des matériaux de calibration pondérés par les valeurs respectives de la fonction de vraisemblance pour ces matériaux, soit :

$$\hat{Z} = \frac{\sum\limits_{p=1}^{P} V_p Z_p^c}{\sum\limits_{p=1}^{P} V_p} \qquad (10)$$

Selon une variante de ce premier mode de réalisation, on effectue dans un premier temps, pour chaque matériau $p$ une interpolation, selon l'épaisseur, entre les spectres de calibration (voire, le cas échéant une extrapolation à partir de ceux-ci) afin déterminer un spectre de calibration interpolé pour chaque épaisseur $e \in [e_{\min}, e_{\max}]$ (où $[e_{\min}, e_{\max}]$ est une plage d'épaisseur supposée commune tous les échantillons de calibration). On peut alors évaluer la fonction de vraisemblance $V\left(Z_p^c, e\right)$ sur une plage d'épaisseur. Cette évaluation est obtenue en remplaçant dans l'expression (8) les scores $n_i^c\left(Z_p^c, e_q^c\right)$ des spectres de calibration par leurs valeurs interpolées définies par :

$$\ln\left[ n_i^c\left(Z_p^c, e\right) \right] = \left( \frac{e_{q+1}^c - e}{e_{q+1}^c - e_q^c} \right) \ln\left[ n_i^c\left(Z_p^c, e_q^c\right) \right] + \left( \frac{e - e_q^c}{e_{q+1}^c - e_q^c} \right) \ln\left[ n_i^c\left(Z_p^c, e_{q+1}^c\right) \right] \qquad (11)$$

où $e_q^c$ et $e_{q+1}^c$ sont les épaisseurs telles que $e_q^c < e < e_{q+1}^c$ (on suppose ici que les épaisseurs sont indexées par valeurs croissantes).

Dans le cas d'une extrapolation vers une épaisseur supérieure à l'épaisseur connue la plus élevée, $e_Q$, on utilise encore l'expression (11) où, de préférence, $e_{q+1}$ correspond à l'épaisseur la plus élevée de l'étalon. Dans le cas d'une extrapolation vers une épaisseur inférieure à l'épaisseur connue la plus faible, $e_1$, on utilise l'expression (11) où, de préférence, $e_q$ correspond à l'épaisseur la plus faible de l'étalon.

L'expression (11) suppose toutefois que l'ensemble source et détecteur n'ait pas dérivé entre l'instant de calibration et l'instant de la mesure (c'est-à-dire $\mu_i = 1$, $i = 1,...,N$). En présence de dérive, il convient de normaliser les scores des différents canaux par les scores de plein flux, soit :

$$\ln\left[\frac{n_i^c\left(Z_p^c,e\right)}{n_{0,i}^c\left(Z_p^c,e\right)}\right] = \left(\frac{e_{q+1}^c - e}{e_{q+1}^c - e_q^c}\right)\ln\left[\frac{n_i^c\left(Z_p^c,e_q^c\right)}{n_{0,i}^c\left(Z_p^c,e_q^c\right)}\right] + \left(\frac{e - e_q^c}{e_{q+1}^c - e_q^c}\right)\ln\left[\frac{n_i^c\left(Z_p^c,e_{q+1}^c\right)}{n_{0,i}^c\left(Z_p^c,e_{q+1}^c\right)}\right] \qquad (12)$$

où $n_{0,i}^c\left(Z_p^c,e_q^c\right)$ et $n_{0,i}^c\left(Z_p^c,e_{q+1}^c\right)$ sont respectivement les scores de plein flux dans le canal $i$ lors de la calibration avec le matériau de calibration $p$ pour les épaisseurs d'échantillon $e_q^c$ et $e_{q+1}^c$, respectivement, et où $n_{0,i}^c\left(Z_p^c,e\right)$ est le score de plein flux interpolé :

$$n_{0,i}^c\left(Z_p^c,e\right) = \frac{n_{0,i}^c\left(Z_p^c,e_{q+1}^c\right) - n_{0,i}^c\left(Z_p^c,e_q^c\right)}{e_{q+1}^c - e_q^c}e + \frac{n_{0,i}^c\left(Z_p^c,e_q^c\right)e_{q+1}^c - n_{0,i}^c\left(Z_p^c,e_{q+1}^c\right)e_q^c}{e_{q+1}^c - e_q^c} \qquad (13)$$

En tout état de cause, une fois l'interpolation/l'extrapolation de la fonction de vraisemblance réalisée en fonction de l'épaisseur, on peut en déduire la valeur de la fonction de vraisemblance marginale :

$$V_p' = \int_{e_{\min}}^{e_{\max}}\left(V\left(Z_p^c,e\right)\right)de \qquad (14)$$

Au cas où les matériaux $\left(Z_p^c,e\right)$ ne sont pas équiprobables, la fonction de vraisemblance marginale s'écrit alors :

$$V_p' = \int_{e_{\min}}^{e_{\max}}\left(V\left(Z_p^c,e\right)\right)\Pr\left(Z_p^c,e\right)de \qquad (15)$$

$\Pr\left(Z_p^c,e\right)$ désignant la probabilité *a priori* du matériau $p$ à l'épaisseur e.

Le numéro atomique effectif du matériau analysé est alors estimé comme une moyenne des numéros atomiques effectifs des matériaux de calibration, pondérés par les valeurs respectives de la fonction de vraisemblance marginale pour ces matériaux, soit :

$$\hat{Z} = \frac{\sum_{p=1}^{P}V_p'Z_p^c}{\sum_{p=1}^{P}V_p'} \qquad (16)$$

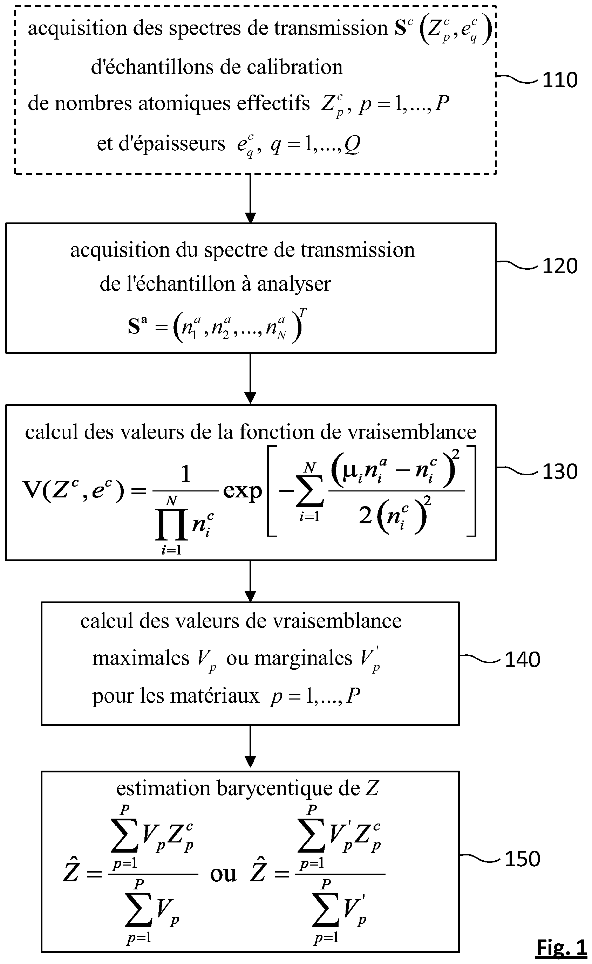

La Fig. 1 reprend sous la forme d'un ordinogramme la méthode d'estimation du numéro atomique effectif d'un matériau à partir de son spectre de transmission, selon le premier mode de réalisation de l'invention.

Préalablement à l'estimation proprement dite, on suppose que l'on a effectué, dans une étape 110, une calibration à partir d'une pluralité $P_Q$ d'échantillons de $P$ matériaux de calibration différents, chaque matériau étant représenté par Q échantillons d'épaisseurs différentes. Les numéros atomiques effectifs $Z_c^p$, p = 1,...,P, de ces matériaux de calibration sont supposés connus. Ils peuvent être par exemple des corps simples pour lesquels le numéro atomique effectif correspond au numéro atomique de ce corps. Les spectres de transmission obtenus pour les $P_Q$ échantillons, dits spectres de calibration, sont notés $\mathbf{S}^c\left(Z_p^c, e_q^c\right)$ ou plus simplement $\mathbf{S}_{pq}^c$, p = 1,...,P, q = 1,...,Q. Chaque spectre $\mathbf{S}^c\left(Z_p^c, e_q^c\right)$ peut correspondre en pratique à la moyenne d'un grand nombre (plusieurs centaines, voire plusieurs milliers) d'acquisitions de calibration.

L'étape de calibration 110 peut avoir été effectuée une fois pour toutes ou bien être répétée régulièrement voire être systématiquement effectuée avant toute nouvelle mesure. On comprend ainsi que cette étape est optionnelle dans la méthode d'estimation. Elle a été représentée pour cette raison en traits discontinus.

A l'étape 120, on effectue une mesure du spectre de transmission du matériau à analyser. On obtient le spectre de transmission $\mathbf{S}^a = \left(n_1^a, n_2^a, ..., n_N^a\right)^T$.

A l'étape 130, on calcule à partir du spectre de transmission $\mathbf{S}^a = \left(n_1^a, n_2^a, ..., n_N^a\right)^T$ et des $PQ$ spectres de calibration, les $PQ$ valeurs $V\left(Z_p^c, e_q^c\right)$ de la fonction de vraisemblance à l'aide de l'expression (8). Ces valeurs indiquent la proximité respective du spectre mesuré avec chacun des $PQ$ spectres des échantillons de calibration.

A l'étape 140, on calcule les valeurs de vraisemblance maximales $V_p$ ou bien les valeurs de vraisemblance marginales Vp pour les différents matériaux de calibration, selon la variante considérée.

A l'étape 150, on estime le numéro atomique effectif du matériau comme une moyenne des numéros atomiques des matériaux de calibration pondérés par les valeurs de vraisemblance maximales ou marginales calculées à l'étape précédente.

Selon un second mode de réalisation de l'invention, on utilise une modélisation statistique du spectre de transmission du matériau à analyser. Pour ce faire, on détermine le nombre de photons transmis par le matériau analysé en supposant que l'arrivée des photons dans chaque canal d'énergie suit une loi de Poisson. Plus précisément, pour chaque canal d'énergie $i$, la probabilité que l'on ait exactement un score de $n_i^a$ photons transmis par le matériau pendant le temps d'irradiation $T$, sachant que le matériau est de numéro atomique effectif $Z$ et d'épaisseur e, est donnée par :

$$\Pr\left(n_i^a \middle| Z, e\right) = e^{-v_i} \frac{v_i^{n_i^a}}{n_i^a!} \qquad (17)$$

où $v_i$ est le nombre moyen de photons transmis par le matériau ($Z,e$) dans le canal $i$ pendant le temps d'irradiation $T$ (choisi identique pour la mesure et la calibration).

Comme dans le premier mode de réalisation, on dispose de $P_Q$ spectres de transmission $\mathbf{S}_{pq}^c$ correspondants à $PQ$ échantillons de calibration ($P$ matériaux, $Q$ épaisseurs pour chaque matériau). Dans le second mode de réalisation, on interpole, et, le cas échéant, on extrapole les spectres $\mathbf{S}_{pq}^c$ pour obtenir un spectre de calibration $\mathbf{S}^c(Z, e) = \left(n_1^c, n_2^c, ..., n_N^c\right)^T$ pour chaque numéro atomique effectif $\mathbf{Z}$ compris dans un intervalle [$Z_{min}, Z_{max}$] et chaque épaisseur $e$ comprise dans un intervalle [$e_{min}, e_{max}$]. Les lois d'interpolation des spectres $\mathbf{S}_{pq}^c$ en fonction du numéro atomique effectif et de l'épaisseur sont précisées plus loin.

Si l'on suppose que l'échantillon à analyser présente un numéro atomique effectif $Z$ et une épaisseur e, le nombre moyen de photons transmis par le matériau, $v_i^a$, pendant le temps d'irradiation peut être relié au score $n_i^c$ du spectre de calibration $S^c(Z,e)$ (non bruité) dans le même canal, par :

$$v_i^a = \mu n_i^c \text{ avec } \mu = \frac{\overline{n}_0^a}{\overline{n}_0^c} \qquad (18)$$

où $\overline{n}_0^c = \sum_{i=1}^{N} n_{0,i}^c$ et $\overline{n}_0^a = \sum_{i=1}^{N} n_{0,i}^a$ sont respectivement le nombre total de photons dans le spectre de plein flux (c'est-à-dire en absence de matériau), lors de la calibration et lors de la mesure. Le rapport traduit la dérive du spectromètre entre la phase de calibration et la phase de mesure. Cette dérive peut être due à la source et/ou au détecteur. En absence de dérive, $\mu = 1$.

Le logarithme népérien de la fonction de vraisemblance donnée par (5) s'exprime comme suit :

$$\ln\left(\mathrm{V}(Z,e)\right) = \sum_{i=1}^{N} \ln\left[\Pr\left(n_i^a \middle| n_i^c(Z,e)\right)\right] \qquad (19)$$

et, en tenant compte de (17) et (18) :

$$\ln\left(\mathrm{V}(Z,e)\right) = -\sum_{i=1}^{N} v_i + \sum_{i=1}^{N} n_i^a \ln v_i - \sum_{i=1}^{N} n_i^a !$$
$$= -\mu\overline{n}^c + \sum_{i=1}^{N} n_i^a \ln\left(\mu n_i^c\right) - \sum_{i=1}^{N} n_i^a ! \qquad (20)$$

avec $\overline{n}^c = \sum_{i=1}^{N} n_i^c$ le nombre de total de photons transmis sur l'ensemble des canaux pendant la phase de calibration.

On cherche le numéro atomique effectif et, le cas échéant, l'épaisseur qui maximise $V(Z,e)$, ou de manière équivalente $\ln(V(Z,e))$. En d'autres termes, on cherche de manière générale le couple $(Z,e)$ conduisant à la distribution de probabilité de $S^c(Z,e)$ la plus proche de $S^a$. Le dernier terme de (16), $\sum_{i=1}^{N} n_i^a !$, ne dépendant que du spectre de transmission de l'échantillon analysé, $S^a$, on peut s'en affranchir dans l'expression de $\ln(V(Z,e))$ qui se réduit alors à :

$$\ln\left(\mathrm{V}(Z,e)\right) = -\mu\overline{n}^c + \sum_{i=1}^{N} n_i^a \ln\left(\mu n_i^c\right) \qquad (21)$$

En définitive, le numéro atomique effectif et, le cas échéant, l'épaisseur du matériau analysé peuvent être estimés par :

$$\left(\hat{Z}_{ML}, \hat{e}_{ML}\right) = \underset{\substack{Z \in [Z\min, Z\max] \\ e \in [e\min, e\max]}}{\arg\max} \left[-\mu\overline{n}^c(Z,e) + \sum_{i=1}^{N} n_i^a \ln\left(\mu n_i^c(Z,e)\right)\right] \qquad (22)$$

la recherche du maximum étant effectuée sur tous les couples $(Z,e)$ du pavé $[Z_{min}, Z_{max}] \times [e_{min}, e_{max}]$. En pratique, l'homme du métier pourra mettre en oeuvre des algorithmes de recherche connus, en particulier

L'épaisseur n'étant pas nécessairement un paramètre d'intérêt pour l'analyse du matériau, on peut restreindre la recherche au seul paramètre $Z$ en utilisant la densité marginale de la fonction de vraisemblance :

$$p(Z) = \frac{\int_{e_{\min}}^{e_{\max}} V(Z,e)\,de}{\int_{Z_{\min}}^{Z_{\max}} \int_{e_{\min}}^{e_{\max}} V(Z,e)\,dZ.de} \tag{23}$$

où la fonction de vraisemblance $V(Z,e)$ est donnée par (21).

Selon une première variante du second mode de réalisation, le numéro atomique effectif du matériau analysé est estimé par la valeur correspondant au maximum de la densité marginale :

$$\hat{Z}_{\mathrm{marg}} = \arg\max_{Z}\left(p(Z)\right) \tag{24}$$

Alternativement, selon une seconde variante, le numéro atomique effectif du matériau analysé peut être estimé à l'aide de l'espérance de $Z$, c'est-à-dire à la moyenne de $Z$ pondérée par la densité marginale :

$$\hat{Z}_{moy} = \int_{Z_{\min}}^{Z_{\max}} Z p(Z)\,dZ \tag{25}$$

D'autres estimations utilisant la fonction de vraisemblance $V(Z,e)$ ou sa densité marginale $p(Z)$ pourront être envisagées par l'homme du métier sans sortir pour autant du cadre de la présente invention.

Comme mentionné plus haut, le second mode de réalisation requiert d'effectuer une interpolation (voire, le cas échéant, une extrapolation) de la fonction de vraisemblance (ou de son logarithme) tant en ce qui concerne les numéros atomiques effectifs que les épaisseurs. A l'issue de la calibration on dispose des $P_Q$ spectres de calibration $\mathbf{S}_{pq}^{c}$ et donc, pour chaque échantillon de calibration $p,q$ des scores $n_i^c\left(Z_p^c, e_q^c\right)$, $i = 1,...,N$. L'interpolation des spectres de calibration sur une plage d'épaisseur $[e_{\min}, e_{\max}]$ est obtenue au moyen de l'expression (11) en absence de dérive du spectromètre (source et détecteur) et au moyen de l'expression (13) si le spectromètre est affecté par une dérive. De même, si les spectres doivent être extrapolés en deçà de la valeur $e_1^c$ ou au-delà de la valeur $e_Q^c$, on utilisera respectivement les expressions (12) et (14) en absence et en présence de dérive.

Dans tous les cas, on obtient ainsi pour un matériau $p$ donné, et pour une épaisseur quelconque $e \in [e_{\min}, e_{\max}]$, un spectre de calibration interpolé défini par $n_i^c\left(Z_p^c, e\right)$, $i = 1,...,N$. En utilisant les scores ainsi interpolés dans l'équation (21), on peut calculer la fonction de vraisemblance quelle que soit l'épaisseur $e \in [e_{\min}, e_{\max}]$, soit

$$\ln\left(\mathrm{V}(Z_p^c, e)\right) = -\mu\overline{n}^c + \sum_{i=1}^{N} n_i^a \ln\left(\mu n_i^c\left(Z_p^c, e\right)\right).$$

De manière similaire, on effectue l'interpolation (voire, le cas échéant, une extrapolation) des spectres de calibration sur une plage de numéro atomique effectif $Z \in [Z_{\min}, Z_{\max}]$. Pour ce faire, on part des spectres de calibration déjà interpolés en épaisseur, et donc des scores $n_i^c\left(Z_p^c, e\right)$, $i = 1,...,N$ ; $p = 1,...,P$.

La dépendance de $n_i^c\left(Z, e\right)$ en fonction du numéro atomique effectif $Z$ est modélisée par la loi suivante :

$$n_i^c\left(Z, e\right) = n_{0,i}^c \exp\left(-\rho\left(\alpha Z^r + \beta\right)\right) \tag{26}$$

$n_{0,i}^c$ est le score du spectre de plein flux dans le canal $i$ lors de la mesure du spectre de transmission pour l'échantillon de numéro atomique effectif $Z$ et d'épaisseur $e$, ou encore, sous forme logarithmique :

$$\ln\left[\,n_i^c\left(Z,e\right)\right] = \ln\left[\,n_{0,i}^c\,\right] - \rho\left(\alpha Z^r + \beta\right) \tag{26'}$$

où $\alpha,\beta,r$ sont des constantes et $p$ est la densité du matériau.

Cette modélisation est basée sur le fait que la section efficace d'interaction des photons avec les atomes du matériau se décompose en une section efficace photoélectrique dépendant de $Z^r$ (où l'exposant $r \approx 4.62$, cette valeur pouvant être optimisée expérimentalement) et d'une section efficace Compton qui n'en dépend pas (constante $\beta$).

La valeur interpolée $n_i^c\left(Z,e\right)$ entre deux nombres atomiques effectifs consécutifs de matériaux de calibration, c'est-à-dire pour $Z_p^c < Z < Z_{p+1}^c$, est alors donnée par :

$$\ln\left[\,n_i^c\left(Z,e\right)\right] = \left(1 - \gamma_p^1\,\frac{\rho}{\rho_p} - \gamma_p^2\,\frac{\rho}{\rho_{p+1}}\right)\ln\left[\,n_{0,i}^c\,\right] +$$
$$\left(\gamma_p^1\,\frac{\rho}{\rho_p}\right)\ln\left[\,n_i^c\left(Z_p^c,e\right)\right] + \left(\gamma_p^2\,\frac{\rho}{\rho_{p+1}}\right)\ln\left[\,n_i^c\left(Z_{p+1}^c,e\right)\right] \tag{27}$$

$$\gamma_p^1 = \frac{\left(Z_{p+1}^c\right)^r - Z^r}{\left(Z_{p+1}^c\right)^r - \left(Z_p^c\right)^r} \;,\quad \gamma_p^2 = \frac{Z^r - \left(Z_p^c\right)^r}{\left(Z_{p+1}^c\right)^r - \left(Z_p^c\right)^r}$$

où et où $\rho_p$, $\rho_{p+1}$ sont respectivement les densités des matériaux $p$ et $p+1$. Une expression similaire pourra être utilisée dans le cas d'une extrapolation.

La relation (27) suppose toutefois que l'ensemble source et détecteur n'ait pas dérivé entre l'instant de calibration et l'instant de la mesure (c'est-à-dire $\mu_i=1$, $i = 1,...,N$). En présence de dérive, il convient de normaliser les scores des différents canaux par les scores de plein flux, soit :

$$\ln\left[\frac{n_i^c\left(Z,e\right)}{n_{0,i}^c\left(Z,e\right)}\right] = \left(\gamma_p^1\,\frac{\rho}{\rho_p}\right)\ln\left[\frac{n_i^c\left(Z_p^c,e\right)}{n_{0,i}^c\left(Z_p^c,e\right)}\right] + \left(\gamma_p^2\,\frac{\rho}{\rho_{p+1}}\right)\ln\left[\frac{n_i^c\left(Z_{p+1}^c,e\right)}{n_{0,i}^c\left(Z_{p+1}^c,e\right)}\right] \tag{28}$$

où $n_{0,i}^c\left(Z_p^c,e\right)$ et $n_{0,i}^c\left(Z_{p+1}^c,e\right)$ sont les scores de plein flux dans le canal $i$, relatifs aux spectres de calibration interpolés à l'épaisseur $e$, pour les matériaux de calibration respectifs de nombre atomiques effectifs $Z_p^c$ et $Z_{p+1}^c$, et où $n_{0,i}^c\left(Z_p^c,e\right)$ est le score de plein flux pour ce même canal, interpolé au numéro atomique effectif $Z$, défini par :

$$n_{0,i}^c\left(Z,e\right) = \frac{n_{0,i}^c\left(Z_{p+1}^c,e\right) - n_{0,i}^c\left(Z_p^c,e\right)}{Z_{p+1}^c - Z_p^c}Z + \frac{n_{0,i}^c\left(Z_{p+1}^c,e\right)Z_p^c - n_{0,i}^c\left(Z_p^c,e\right)Z_{p+1}^c}{Z_{p+1}^c - Z_p^c} \tag{29}$$

La densité du matériau varie faiblement avec le numéro atomique effectif $Z$. Cette loi de variation peut par exemple être approximée par une loi linéaire, autrement dit :

$$\rho = \frac{\rho_{p+1} - \rho_p}{Z_{p+1}^c - Z_p^c}Z + \frac{\rho_{p+1}Z_p^c - \rho_p Z_{p+1}^c}{Z_{p+1}^c - Z_p^c} \tag{30}$$

L'interpolation des spectres de calibration sur le pavé $[Z_{min}, Z_{max}] \times [e_{min}, e_{max}]$ a été réalisée ci-dessus au moyen d'une interpolation sur les épaisseurs suivi d'une seconde interpolation sur les numéros atomiques effectifs. D'autres formules d'interpolation, autres que L'homme du métier comprendra également que les spectres de calibration auraient alternativement pu faire l'objet d'une interpolation sur les numéros atomiques effectifs suivie d'une interpolation sur les épaisseurs.

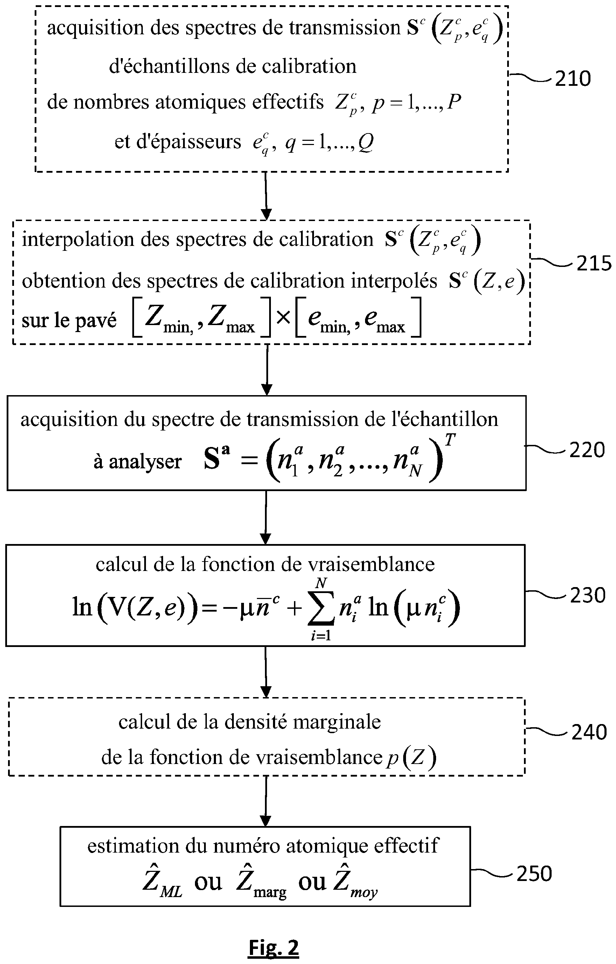

La Fig. 2 reprend sous la forme d'un ordinogramme la méthode d'estimation du numéro atomique effectif d'un matériau à partir de son spectre de transmission, selon le second mode de réalisation de l'invention.

Comme dans le premier mode de réalisation, on effectue préalablement en 210 une calibration à partir d'une pluralité $PQ$ d'échantillons de $P$ matériaux différents, chaque matériau étant représenté par Q échantillons d'épaisseurs différentes. Les numéros atomiques effectifs $Z_c^p$ , $p = 1,..., P,$ de ces matériaux de calibration sont supposés connus. On dispose à l'issue de cette étape une pluralité $PQ$ de spectres de transmission $\mathbf{S}_{pq}^c$ respectivement obtenus pour les $PQ$ étalons. Cette étape est optionnelle au sens où elle n'est pas nécessairement répétée à chaque mesure et peut avoir été effectuée une fois pour toutes avant une campagne de mesures.

A l'étape 215, on interpole les spectres de transmission $\mathbf{S}_{pq}^c$ pour obtenir des spectres de calibration $\mathbf{S}^c(Z,e)$ pour chaque valeur de $Z \in [Z_{min}, Z_{max}]$ et chaque valeur de $e \in [e_{min}, e_{max}]$. En pratique, on effectue ces interpolations pour un grand nombre de valeurs discrètes (très supérieur à $PQ$) correspondant à un échantillonnage fin des intervalles $[Z_{min}, Z_{max}]$ et $[e_{min}, e_{max}]$. Cette étape, comme la précédente, peut être effectuée une fois pour toutes, préalablement aux mesures.

A l'étape 220, on effectue une mesure du spectre de transmission du matériau à analyser dans une pluralité $N$ de canaux d'énergie, soit $\mathbf{S^a} = \left( n_1^a, n_2^a, ..., n_N^a \right)^T$ . $\mathbf{S}^a$

A l'étape 230, on calcule à partir du spectre de transmission $\mathbf{S^a} = \left( n_1^a, n_2^a, ..., n_N^a \right)^T$ $\mathbf{S}^a$ et des spectres de calibration $\mathbf{S}^c(Z,e)$ pour $Z \in [Z_{min}, Z_{max}]$ et $e \in [e_{min}, e_{max}]$, la fonction de vraisemblance, ou son logarithme donné par l'expression (21).

Optionnellement, à l'étape 240, on calcule la densité marginale de la fonction de vraisemblance à l'aide de l'expression (23).

A l'étape 240, on estime le numéro atomique effectif du matériau à analyser comme celui maximisant la fonction de vraisemblance (cf. expression (22)) ou sa densité marginale par rapport à $Z$(cf. expression (23)), voire comme la moyenne du numéro atomique effectif sur $[Z_{min}, Z_{max}]$ pondérée par ladite densité marginale (cf. expression (25)).

La méthode d'estimation selon l'invention a été évaluée à l'aide d'une simulation. Le spectromètre simulé est un détecteur à base de CdTe composé de pixels de 800x800 $\mu m^2$ et de 3mm d'épaisseur. L'effet d'induction lié à la propagation des charges dans le détecteur ainsi que l'effet de partage de charge avec les pixels voisins a été pris en compte, tout comme la dégradation de la résolution de la réponse du détecteur avec l'intensité du flux. Un spectre de 20000 photons incidents entre 15 keV et 120 keV a été simulé. Le nombre de canaux d'énergie considérés était de $N$ = 105 (pas de 1 keV).

Les matériaux de calibration étaient en Polyéthylène (PE), Polyoxyméthylène (POM) ou Delrin™, Polyfluorure de vinylidène (PVDF) ou Kynar™. Les échantillons de ces matériaux étaient d'épaisseurs allant de 0.5cm à 20cm par pas de 0.5cm. Autrement dit dans le cas présent $P$ = 3 et $Q$ = 40. Les numéros atomiques effectifs des matériaux de calibration ont été pris respectivement à $Z(PE)$=5.80 ; $Z(POM)$=7.26 ; $Z(PVDF)$ =8.20.

L'échantillon à analyser était en Polytétrafluoroéthylène (PTFE) ou Teflon™ (numéro atomique effectif $Z(PTFE)$ = 8.56) et d'épaisseur 4.5cm.

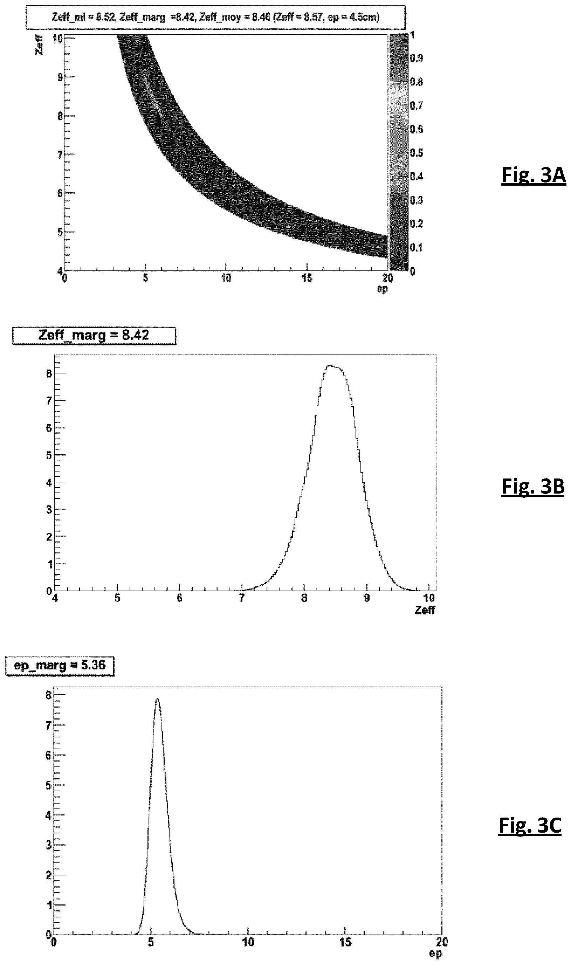

La Fig. 3A représente la fonction de vraisemblance $V(Z,e)$ d'une réalisation bruitée d'un spectre de transmission de 5.5cm de PTFE. Le pas de discrétisation en numéro atomique effectif $Z$ était de 0.025 et celui en épaisseur $e$ de 0.025 cm.

La Fig. 3B représente la densité marginale de fonction de vraisemblance (ou fonction de vraisemblance marginale) en fonction du numéro atomique telle que définie dans l'expression (23). On remarque que cette fonction présente un pic pour $Z$ =8.42 (estimateur défini par l'expression (24)).

L'estimation selon le maximum de vraisemblance (estimateur défini par l'expression (22)) donne $\hat{Z}_{ML}$ =8.52 et celle selon la moyenne pondérée par la densité marginale (estimateur défini par l'expression (25)) donne $\hat{Z}_{moy}$ =8.46. On voit que dans ce cas, l'estimateur $\hat{Z}_{ML}$ est le plus proche de valeur réelle ($Z(PTFE)$ = 8.56).

La Fig. 3C représente la densité marginale de la fonction de vraisemblance en fonction de l'épaisseur. On voit que celle-ci présente un pic à 5.2 cm, avec donc ici une erreur de prédiction de 0.7cm.

Ces estimations peuvent être encore améliorées en prenant en considération un plus grand nombre de matériaux de calibrage et en utilisant un discrétisation plus fine en numéro atomique effectif et en épaisseur.

**Revendications**

1. Méthode de mesure du numéro atomique effectif d'un matériau pour une bande spectrale X ou gamma prédéterminée, comprenant les étapes:

   on mesure (120, 220) un spectre de transmission ($\mathbf{S^a} = \left( n_1^a, n_2^a, ..., n_N^a \right)^T$) d'un échantillon dudit matériau dans une pluralité ($N$) de canaux d'énergie de ladite bande spectrale ;
   on calcule (130,230) une fonction de vraisemblance du numéro atomique effectif et de l'épaisseur de l'échantillon dudit matériau à partir du spectre de transmission ainsi mesuré et d'une pluralité de spectres de transmission ($\mathbf{S}^c(Z_p^c, e_q^c)$), dits spectres de calibration, obtenus pour une pluralité d'échantillons de matériaux de calibration ayant des nombres atomiques effectifs connus et des épaisseurs connues, **caractérisée en ce que** on interpole les spectres de calibration pour obtenir un spectre de calibration interpolé pour chaque numéro atomique effectif appartenant à un premier intervalle ($[Z_{min}, Z_{max}]$), et l'on calcule pour chaque numéro atomique effectif appartenant à cet intervalle et chaque épaisseur donnée, une valeur de ladite fonction de vraisemblance ;
   on estime (140, 240) le numéro atomique effectif ($\hat{Z}$) dudit matériau à partir des valeurs de la fonction de vraisemblance ainsi obtenues.

2. Méthode de mesure du numéro atomique effectif d'un matériau selon la revendication 1, **caractérisée en ce que** l'on interpole les spectres de calibration pour obtenir un spectre de calibration interpolé pour chaque numéro atomique effectif appartenant à un second intervalle ($[e_{min}, e_{max}]$) et que l'on calcule pour chaque épaisseur appartenant à cet intervalle et chaque numéro atomique effectif donné, une valeur de ladite fonction de vraisemblance.

3. Méthode de mesure du numéro atomique effectif d'un matériau selon la revendication 2, **caractérisée en ce que** pour chaque matériau de calibration ($p$) de numéro atomique effectif connu ($Z_p^c$), on effectue une interpolation entre les spectres de calibration relatifs à des épaisseurs connues afin de déterminer un spectre de calibration interpolé pour chaque épaisseur d'un intervalle d'épaisseur donné ($[e_{min}, e_{max}]$), la fonction de vraisemblance étant évaluée sur cet intervalle d'épaisseur à partir du spectre de calibration interpolé, et que l'on détermine la valeur maximale de la fonction de vraisemblance sur ledit intervalle d'épaisseur, ladite valeur maximale étant associée au matériau.

4. Méthode de mesure du numéro atomique effectif d'un matériau selon la revendication 3, **caractérisée en ce que** le numéro atomique effectif ($\hat{Z}$) du matériau est estimé comme la moyenne de numéros atomiques effectifs appartenant à un premier intervalle ($[Z_{min}, Z_{max}]$), pondérés par les valeurs maximales de la fonction de vraisemblance qui leur sont respectivement associées.

5. Méthode de mesure du numéro atomique effectif d'un matériau selon la revendication 2, **caractérisée en ce que** pour chaque matériau de calibration ($p$) de numéro atomique effectif connu ($Z_p^c$), on effectue une interpolation entre les spectres de calibration relatifs à des épaisseurs connues afin de déterminer un spectre de calibration interpolé pour chaque épaisseur d'un intervalle d'épaisseur donné ($[e_{min}, e_{max}]$), la fonction de vraisemblance étant évaluée sur cet intervalle d'épaisseur à partir du spectre de calibration interpolé, puis intégrée sur cet intervalle d'épaisseur pour donner une valeur de fonction de vraisemblance marginale associée à ce matériau de calibration.

6. Méthode de mesure du numéro atomique effectif d'un matériau selon la revendication 5, **caractérisée en ce que** le numéro atomique effectif ($\hat{Z}$) du matériau est estimé comme la moyenne des numéros atomiques effectifs connus des matériaux de calibration, pondérés par les valeurs de la fonction de vraisemblance marginale respectivement associées à ces matériaux de calibration.

7. Méthode de mesure du numéro atomique effectif d'un matériau selon l'une des revendications précédentes, **caractérisée en ce que** les valeurs de la fonction de vraisemblance sont déterminées pour chaque couple ($Z_p^c, e_q^c$) de numéro atomique effectif et d'épaisseur par :

$$V(Z_p^c, e_q^c) = \frac{1}{\prod\limits_{i=1}^{N} n_i^c} \exp\left[ -\sum\limits_{i=1}^{N} \frac{\left(\mu_i n_i^a - n_i^c\right)^2}{2\left(n_i^c\right)^2} \right]$$

où les $n_i^a$, $i = 1,...,N$ sont les valeurs du spectre de transmission du matériau dans les différents canaux, $n_i^c$, $i = 1,...,N$ sont les valeurs du spectre de transmission du matériau de calibration dans ces mêmes canaux et $\mu_i$ est le rapport entre le nombre de photons reçus dans le canal $i$ en absence de matériau lors de la calibration $(n_{0,i}^c)$ et le nombre de photons reçus en absence de matériau lors de la mesure $(n_{0,i}^a)$ dans le même canal.

8. Méthode de mesure du numéro atomique effectif d'un matériau selon la revendication 2, **caractérisée en ce que**, pour chaque couple (Z,e) de numéro atomique effectif appartenant à un premier intervalle et d'épaisseur appartenant à un second intervalle, on calcule la fonction de vraisemblance V(Z,e) à partir de :

$$\ln\left(V(Z,e)\right) = -\mu\bar{n}^c + \sum\limits_{i=1}^{N} n_i^a \ln\left(\mu n_i^c\right)$$

où les $n_i^a$, $i = 1,...,N$ sont les valeurs du spectre de transmission du matériau dans les différents canaux, $n_i^c$, $i = 1,...,N$ sont les valeurs du spectre de transmission interpolé dans ces mêmes canaux, $\mu$ est le rapport entre le nombre total de photons reçus dans l'ensemble de canaux et en absence de matériau lors de la mesure et le nombre total de photons reçus dans le même ensemble de canaux et en absence de matériau lors de la calibration, et $\bar{n}_c$ est le nombre total de photons reçus dans le même ensemble de canaux en présence du matériau de calibration, lors de la calibration.

9. Méthode de mesure du numéro atomique effectif d'un matériau selon la revendication 8, **caractérisée en ce que** le numéro atomique du matériau est estimé comme celui ($\hat{Z}_{ML}$) qui maximise la fonction de vraisemblance V(Z,e) sur le pavé constitué par le produit cartésien entre le premier intervalle et le second intervalle.

10. Méthode de mesure du numéro atomique effectif d'un matériau selon la revendication 8, **caractérisée en ce que** l'on détermine la densité marginale (p(Z)) de la fonction de vraisemblance sur ledit premier intervalle, en intégrant la densité de la fonction de vraisemblance sur le second intervalle.

11. Méthode de mesure du numéro atomique effectif d'un matériau selon la revendication 9, **caractérisée en ce que** le numéro atomique effectif du matériau est estimé comme celui ($\hat{Z}_{marg}$) maximisant la densité marginale sur ledit premier intervalle.

12. Méthode de mesure du numéro atomique effectif d'un matériau selon la revendication 9, **caractérisée en ce que** le numéro atomique effectif du matériau est estimé comme la moyenne du numéro effectif ($Z_{moy}$) pondéré par la densité marginale de la fonction de vraisemblance sur ledit premier intervalle.

13. Méthode de mesure du numéro atomique effectif d'un matériau selon l'une des revendications 2, 8-12, **caractérisée en ce que** pour une épaisseur e comprise entre une première épaisseur connue $e_q^c$ et une seconde épaisseur connue $e_{q+1}^c$ où $e_q^c < e < e_{q+1}^c$, on obtient un spectre de calibration interpolé $S^c(Z^c,e)$ pour le numéro atomique effectif $Z^c$ et l'épaisseur $e$ à partir des spectres de calibration $S^c\left(Z^c, e_q^c\right)$ et $S^c\left(Z^c, e_{q+1}^c\right)$ respectivement obtenus pour le même numéro atomique effectif et les épaisseurs respectives $e_q^c$ et $e_{q+1}^c$, au moyen de :

$$\ln\left[n_i^c\left(Z^c,e\right)\right]=\left(\frac{e_{q+1}^c-e}{e_{q+1}^c-e_q^c}\right)\ln\left[n_i^c\left(Z^c,e_q^c\right)\right]+\left(\frac{e-e_q^c}{e_{q+1}^c-e_q^c}\right)\ln\left[n_i^c\left(Z^c,e_{q+1}^c\right)\right]$$

où $n_i^c\left(Z^c,e\right)$ , $n_i^c\left(Z^c,e_q^c\right)$ et $n_i^c\left(Z^c,e_{q+1}^c\right)$ sont les valeurs respectives des spectres $\mathbf{S}^c(Z^c,e)$, $\mathbf{S}^c\left(Z^c,e_q^c\right)$ et $\mathbf{S}^c\left(Z^c,e_{q+1}^c\right)$ dans le canal $i$ de la bande spectrale.

14. Méthode de mesure du numéro atomique effectif d'un matériau selon l'une des revendication 1, 8-13, **caractérisée en ce que** pour un numéro atomique effectif $Z$ compris entre un premier numéro atomique effectif connu $Z_p^c$ et un second numéro atomique effectif connu $Z_{p+1}^c$ où $Z_p^c < Z < Z_{p+1}^c$ , on obtient un spectre de calibration interpolé $\mathbf{S}^c(Z,e^c)$ pour le numéro atomique effectif $Z$ et l'épaisseur $e^c$ à partir des spectres de calibration $\mathbf{S}^c\left(Z_p^c,e^c\right)$ et $\mathbf{S}^c\left(Z_{p+1}^c,e^c\right)$ respectivement obtenus pour la même épaisseur $e^c$ et les nombres atomiques respectifs $Z_p^c$ et $Z_{p+1}^c$ , au moyen de :

$$\ln\left[n_i^c\left(Z,e^c\right)\right]=\left(1-\gamma_p^1\frac{\rho}{\rho_p}-\gamma_p^2\frac{\rho}{\rho_{p+1}}\right)\ln\left[n_{0,i}^c\right]+$$
$$\left(\gamma_p^1\frac{\rho}{\rho_p}\right)\ln\left[n_i^c\left(Z_p^c,e^c\right)\right]+\left(\gamma_p^2\frac{\rho}{\rho_{p+1}}\right)\ln\left[n_i^c\left(Z_{p+1}^c,e^c\right)\right]$$

où $n_i^c\left(Z,e^c\right)$, $n_i^c\left(Z_p^c,e^c\right)$ $n_i^c\left(Z_{p+1}^c,e^c\right)$ sont les valeurs respectives des spectres $\mathbf{S}^c(Z,e^c)$, $\mathbf{S}^c\left(Z_p^c,e^c\right)$ et $\mathbf{S}^c\left(Z_{p+1}^c,e^c\right)$ dans le canal $i$ de la bande spectrale, $n_{0,i}^c$ est le score du spectre de plein flux dans le canal $i$,

$$\gamma_p^1=\frac{\left(Z_{p+1}^c\right)^r-Z^r}{\left(Z_{p+1}^c\right)^r-\left(Z_p^c\right)^r},\quad \gamma_p^2=\frac{Z^r-\left(Z_p^c\right)^r}{\left(Z_{p+1}^c\right)^r-\left(Z_p^c\right)^r},$$

$r$ est une constante réelle prédéterminée, $\rho_p,\rho_{p+1}$ sont respectivement les densités des matériaux $p$ et $p+1$, et où $p$ est la densité du matériau de nombre atomique $Z$ obtenue par interpolation entre les densités $\rho_p$ et $\rho_{p+1}$ .

**Patentansprüche**

1. Verfahren zur Messung der effektiven Atomnummer eines Materials für ein vorbestimmtes Röntgen- oder Gammaspektralband, umfassend die folgenden Schritte:

man misst (120, 220) ein Transmissionsspektrum $(\mathbf{S^a}=\left(n_1^a,n_2^a,...,n_N^a\right)^T)$ einer Probe des Materials in einer Mehrzahl ($N$) von Energiekanälen des Spektralbands;
man berechnet (130, 230) eine Wahrscheinlichkeitsfunktion der effektiven Atomnummer und der Dicke der Probe des Materials ausgehend von dem derart gemessenen Transmissionsspektrum und von einer Mehrzahl von Transmissionsspektren ($\mathbf{S}^c(Z_p^c,e_q^c)$ ), genannt Kalibrationsspektren, die für eine Mehrzahl von Proben von Kalibrationsmaterialien erhalten sind, die bekannte effektive Atomnummern und bekannte Dicken haben, **dadurch gekennzeichnet, dass**

man die Kalibrationsspektren interpoliert, um ein interpoliertes Kalibrationsspektrum für jede effektive Atomnummer zu erhalten, die zu einem ersten Intervall ([$Z_{min}$ ,$Z_{max}$]) gehört, und man für jede effektive Atomnummer, die zu diesem Intervall gehört, und für jede gegebene Dicke einen Wert der Wahrscheinlichkeitsfunktion berechnet;

man die effektive Atomnummer ($\hat{Z}$) des Materials ausgehend von den derart erhaltenen Werten der Wahrscheinlichkeitsfunktion abschätzt (140, 240).

2. Verfahren zur Messung der effektiven Atomnummer eines Materials nach Anspruch 1, **dadurch gekennzeichnet, dass** man die Kalibrationsspektren interpoliert, um ein interpoliertes Kalibrationsspektrum für jede effektive Atomnummer zu erhalten, die zu einem zweiten Intervall ([$e_{min}$,$e_{max}$]) gehört, und dass man für jede Dicke, die zu diesem Intervall gehört, und jede gegebene effektive Atomnummer einen Wert der Wahrscheinlichkeitsfunktion berechnet.

3. Verfahren zur Messung der effektiven Atomnummer eines Materials nach Anspruch 2, **dadurch gekennzeichnet, dass** man für jedes Kalibrationsmaterial (*p*) mit bekannter effektiver Atomnummer $\left( Z_p^c \right)$ eine Interpolation durchführt zwischen den Kalibrationsspektren bezüglich bekannter Dicken, um ein interpoliertes Kalibrationsspektrum für jede Dicke eines gegebenen Dickenintervalls ([$e_{min}$ ,$e_{max}$]) zu bestimmen, wobei die Wahrscheinlichkeitsfunktion auf diesem Dickenintervall ausgehend von dem interpolierten Kalibrationsspektrum evaluiert wird, und dass man den Maximalwert der Wahrscheinlichkeitsfunktion auf dem Dickenintervall bestimmt, wobei der Maximalwert dem Material zugeordnet ist.

4. Verfahren zur Messung der effektiven Atomnummer eines Materials nach Anspruch 3, **dadurch gekennzeichnet, dass** die effektive Atomnummer ($\hat{Z}$) des Materials als der Mittelwert von effektiven Atomnummern abgeschätzt wird, die zu einem ersten Intervall ([$Z_{min}$ ,$Z_{max}$]) gehören, gewichtet mit den Maximalwerten der Wahrscheinlichkeitsfunktion, die ihnen jeweils zugeordnet sind.

5. Verfahren zur Messung der effektiven Atomnummer eines Materials nach Anspruch 2, **dadurch gekennzeichnet, dass** man für jedes Kalibrationsmaterial (*p*) mit bekannter effektiver Atomnummer $\left( Z_p^c \right)$ eine Interpolation durchführt zwischen den Kalibrationsspektren bezüglich bekannter Dicken, um ein interpoliertes Kalibrationsspektrum für jede Dicke eines gegebenen Dickenintervalls ([$e_{min}$,$e_{max}$]) zu bestimmen, wobei die Wahrscheinlichkeitsfunktion auf diesem Dickenintervall ausgehend von dem interpolierten Kalibrationsspektrum evaluiert und dann über dieses Dickenintervall integriert wird, um einen diesem Kalibrationsmaterial zugeordneten Grenzwert der Wahrscheinlichkeitsfunktion zu ergeben.

6. Verfahren zur Messung der effektiven Atomnummer eines Materials nach Anspruch 5, **dadurch gekennzeichnet, dass** die effektive Atomnummer ($\hat{Z}$) des Materials abgeschätzt wird als der Mittelwert der bekannten effektiven Atomnummern der Kalibrationsmaterialien, gewichtet mit den Grenzwerten der Wahrscheinlichkeitsfunktion, die diesen Kalibrationsmaterialien jeweils zugeordnet sind.

7. Verfahren zur Messung der effektiven Atomnummer eines Materials nach einem der vorhergehenden Ansprüche, **dadurch gekennzeichnet, dass** die Werte der Wahrscheinlichkeitsfunktion für jedes Paar $\left( Z_p^c, e_q^c \right)$ von effektiver Atomnummer und Dicke bestimmt werden durch:

$$ \mathrm{V}(Z_p^c, e_q^c) = \frac{1}{\displaystyle\prod_{i=1}^{N} n_i^c} \exp\left[ -\sum_{i=1}^{N} \frac{\left( \mu_i n_i^a - n_i^c \right)^2}{2 \left( n_i^c \right)^2} \right] $$

wobei die $n_i^a$ , *i* = 1,..., *N* die Werte des Transmissionsspektrums des Materials in den verschiedenen Kanälen sind, $n_i^c$ , *i* = 1,..., *N* die Werte des Transmissionsspektrums des Kalibrationsmaterials in diesen gleichen Kanälen sind, und $\mu_i$ das Verhältnis ist zwischen der Zahl von Photonen, die in dem Kanal *i* in Abwesenheit von Material während der Kalibration $\left( n_{0,i}^c \right)$ empfangen sind, und der Zahl von Photonen, die in Abwesenheit von Material während der Messung $\left( n_{0,i}^{a} \right)$ in dem gleichen Kanal empfangen sind.

8.  Verfahren zur Messung der effektiven Atomnummer eines Materials nach Anspruch 2, **dadurch gekennzeichnet, dass** man für jedes Paar (*Z,e*) von effektiver Atomnummer, die zu einem ersten Intervall gehört, und von Dicke, die zu einem zweiten Intervall gehört, die Wahrscheinlichkeitsfunktion V(*Z,e*) berechnet ausgehend von:

$$\ln \left( \mathrm{V}(Z,e) \right) = -\mu \overline{n}^{c} + \sum_{i=1}^{N} n_{i}^{a} \ln \left( \mu n_{i}^{c} \right)$$

wobei die $n_{i}^{a}$, *i* = 1,..., *N* die Werte des Transmissionsspektrums des Materials in den verschiedenen Kanälen sind, $n_{i}^{c}$, *i* = 1,...,*N* die Werte des interpolierten Transmissionsspektrums in diesen gleichen Kanälen sind, $\mu$ das Verhältnis ist zwischen der Gesamtzahl von Photonen, die in der Gesamtheit von Kanälen und in Abwesenheit von Material während der Messung empfangen sind, und der Gesamtzahl von Photonen, die in der gleichen Gesamtheit von Kanälen und in Abwesenheit von Material während der Kalibration empfangen sind, und $\overline{n}_{c}$, die Gesamtzahl von Photonen ist, die in der gleichen Gesamtheit von Kanälen in Anwesenheit des Kalibrationsmaterials während der Kalibration empfangen ist.

9.  Verfahren zur Messung der effektiven Atomnummer eines Materials nach Anspruch 8, **dadurch gekennzeichnet, dass** die Atomnummer des Materials abgeschätzt wird als jene ($\hat{Z}_{ML}$), die die Wahrscheinlichkeitsfunktion V(*Z,e*) auf dem Block maximiert, der durch das kartesische Produkt zwischen dem ersten Intervall und dem zweiten Intervall gebildet ist.

10. Verfahren zur Messung der effektiven Atomnummer eines Materials nach Anspruch 8, **dadurch gekennzeichnet, dass** man die Grenzdichte (*p(Z)*) der Wahrscheinlichkeitsfunktion auf dem ersten Intervall bestimmt, indem man die Dichte der Wahrscheinlichkeitsfunktion über das zweite Intervall integriert.

11. Verfahren zur Messung der effektiven Atomnummer eines Materials nach Anspruch 9, **dadurch gekennzeichnet, dass** die effektive Atomnummer des Materials abgeschätzt wird als jene ($\hat{Z}_{marg}$), die die Grenzdichte auf dem ersten Intervall maximiert.

12. Verfahren zur Messung der effektiven Atomnummer eines Materials nach Anspruch 9, **dadurch gekennzeichnet, dass** die effektive Atomnummer des Materials abgeschätzt wird als der Mittelwert der effektiven Nummer (*Z_{moy}*), gewichtet mit der Grenzdichte der Wahrscheinlichkeitsfunktion auf dem ersten Intervall.

13. Verfahren zur Messung der effektiven Atomnummer eines Materials nach einem der Ansprüche 2, 8 bis 12, **dadurch gekennzeichnet, dass** man für eine Dicke e, die enthalten ist zwischen einer ersten bekannten Dicke $e_{q}^{c}$ und einer zweiten bekannten Dicke $e_{q+1}^{c}$, wobei $e_{q}^{c} < e < e_{q+1}^{c}$ ein interpoliertes Kalibrationsspektrum $\mathbf{S}^{c}(Z^{c},e)$ für die effektive Atomnummer $Z^{c}$ und die Dicke *e* erhält ausgehend von den Kalibrationsspektren $\mathbf{S}^{c}\left( Z^{c}, e_{q}^{c} \right)$ und $\mathbf{S}^{c}\left( Z^{c}, e_{q+1}^{c} \right)$, die erhalten sind für die gleiche effektive Atomnummer und die jeweiligen Dicken $e_{q}^{c}$ beziehungsweise $e_{q+1}^{c}$ mit Hilfe von:

$$\ln \left[ n_{i}^{c}\left( Z^{c},e \right) \right] = \left( \frac{e_{q+1}^{c}-e}{e_{q+1}^{c}-e_{q}^{c}} \right) \ln \left[ n_{i}^{c}\left( Z^{c},e_{q}^{c} \right) \right] + \left( \frac{e-e_{q}^{c}}{e_{q+1}^{c}-e_{q}^{c}} \right) \ln \left[ n_{i}^{c}\left( Z^{c},e_{q+1}^{c} \right) \right]$$

wobei $n_{i}^{c}\left( Z^{c},e \right)$, $n_{i}^{c}\left( Z^{c},e_{q}^{c} \right)$ und $n_{i}^{c}\left( Z^{c},e_{q+1}^{c} \right)$ die jeweiligen Werte der Spektren $\mathbf{S}^{c}(Z^{c},e)$, $\mathbf{S}^{c}\left( Z^{c},e_{q}^{c} \right)$

und $\mathbf{S}^c\left(Z^c, e^c_{q+1}\right)$ in dem Kanal $i$ des Spektralbands sind.

14. Verfahren zur Messung der effektiven Atomnummer eines Materials nach einem der Ansprüche 1, 8 bis 13, **dadurch gekennzeichnet, dass** man für eine effektive Atomnummer $Z$, die enthalten ist zwischen einer ersten bekannten effektiven Atomnummer $Z^c_p$ und einer zweiten bekannten effektiven Atomnummer $Z^c_{p+1}$, wobei $Z^c_p < Z < Z^c_{p+1}$, ein interpoliertes Kalibrationsspektrum $\mathbf{S}^c(Z,e^c)$ für die effektive Atomnummer $Z$ und die Dicke $e^c$ erhält ausgehend von den Kalibrationsspektren $\mathbf{S}^c\left(Z^c_p, e^c\right)$ und $\mathbf{S}^c\left(Z^c_{p+1}, e^c\right)$, die erhalten sind für die gleiche Dicke $e^c$ und die jeweiligen Atomnummern $Z^c_p$ beziehungsweise $Z^c_{p+1}$ mit Hilfe von:

$$\ln\left[n^c_i\left(Z,e^c\right)\right] = \left(1 - \gamma^1_p \frac{\rho}{\rho_p} - \gamma^2_p \frac{\rho}{\rho_{p+1}}\right)\ln\left[n^c_{0,i}\right] +$$

$$\left(\gamma^1_p \frac{\rho}{\rho_p}\right)\ln\left[n^c_i\left(Z^c_p, e^c\right)\right] + \left(\gamma^2_p \frac{\rho}{\rho_{p+1}}\right)\ln\left[n^c_i\left(Z^c_{p+1}, e^c\right)\right]$$

wobei $n^c_i\left(Z,e^c\right)$, $n^c_i\left(Z^c_p, e^c\right)$, $n^c_i\left(Z^c_{p+1}, e^c\right)$ die jeweiligen Werte der Spektren $\mathbf{S}^c(Z,e^c)$, $\mathbf{S}^c\left(Z^c_p, e^c\right)$ und $\mathbf{S}^c\left(Z^c_{p+1}, e^c\right)$ in den Kanal $i$ des Spektralbands sind, wobei $n^c_{0,i}$ der Wert des Vollflussspektrums in dem Kanal $i$

$$\gamma^1_p = \frac{\left(Z^c_{p+1}\right)^r - Z^r}{\left(Z^c_{p+1}\right)^r - \left(Z^c_p\right)^r}, \quad \gamma^2_p = \frac{Z^r - \left(Z^c_p\right)^r}{\left(Z^c_{p+1}\right)^r - \left(Z^c_p\right)^r},$$

ist, $r$ eine vorbestimmte reelle Konstante ist, $\rho_p, \rho_{p+1}$ die Dichten der Materialien $p$ beziehungsweise $p+1$ sind, und wobei $\rho$ die Dichte des Materials mit der Atomnummer $Z$ ist, erhalten durch Interpolation zwischen den Dichten $\rho_p$ und $\rho_{p+1}$.

## Claims

1. Method for measuring the effective atomic number of a material for a predetermined X or gamma spectral band, comprising the steps:

   a transmission spectrum $\left(\mathbf{S^a} = \left(n^a_1, n^a_2, ..., n^a_N\right)^T\right)$ of a sample of said material in a plurality ($N$) of energy channels of said spectral band is measured (120, 220);
   a likelihood function of the effective atomic number and of the thickness of the sample of said material is calculated (130, 230) from the transmission spectrum measured as such and from a plurality of transmission spectra $\left(\mathbf{S}^c(Z^c_p, e^c_q)\right)$, referred to as calibration spectra, obtained for a plurality of samples of calibration materials having known effective atomic numbers and known thicknesses;
   **characterized in that**
   the calibration spectra are interpolated in order to obtain an interpolated calibration spectrum for each effective atomic number belonging to a first interval ($[Z_{min},Z_{max}]$), and **in that** for each effective atomic number belonging to this interval and each given thickness, a value of said likelihood function is calculated ;
   the effective atomic number ($\hat{Z}$) of said material is estimated (140, 240) on the basis of values of the likelihood function thus obtained.

2. Method for measuring the effective atomic number of a material according to claim 1, **characterised in that** the calibration spectra are interpolated in order to obtain an interpolated calibration spectrum for each effective atomic number belonging to a second interval ($[e_{min},e_{max}]$) and that for each thickness belonging to this interval and each given effective atomic number, a value of said likelihood function is calculated.

3. Method for measuring the effective atomic number of a material according to claim 3, **characterised in that** for each calibration material ($p$) of known effective atomic number $(Z_p^c)$, an interpolation is carried out between the calibration spectra relative to known thicknesses in order to determine an interpolated calibration spectrum for each thickness of a given thickness interval ($[e_{min}, e_{max}]$), with the likelihood function being evaluated over this thickness interval from the interpolated calibration spectrum, and the maximum value of the likelihood function is determined over said thickness interval, said maximum value being associated with the material.

4. Method for measuring the effective atomic number of a material according to claim 3, **characterised in that** the effective atomic number ($\hat{Z}$) of the material is estimated as the average of the effective atomic numbers belonging to a first interval ($[Z_{min}, Z_{max}]$), weighted by the maximum values of the likelihood function that are respectively associated to them.

5. Method for measuring the effective atomic number of a material according to claim 2, **characterised in that** for each calibration material ($p$) of known effective atomic number $(Z_p^c)$, an interpolation is carried out between the calibration spectra relative to known thicknesses in order to determine an interpolated calibration spectrum for each thickness of a given thickness interval ($[e_{min}, e_{max}]$), with the likelihood function being evaluated over this thickness interval from the interpolated calibration spectrum, then integrated over this thickness interval in order to give a marginal likelihood function value associated with this calibration material.

6. Method for measuring the effective atomic number of a material according to claim 5, **characterised in that** the effective atomic number ($\hat{Z}$) of the material is estimated as the average of the known effective atomic numbers of the calibration materials, weighted by the values of the marginal likelihood function respectively associated with these calibration materials.

7. Method for measuring the effective atomic number of a material according to one of the preceding claims, **characterised in that** the values of the likelihood function are determined for each pair $(Z_p^c, e_q^c)$ of effective atomic number and of thickness by:

$$V(Z_p^c, e_q^c) = \frac{1}{\prod_{i=1}^{N} n_i^c} \exp\left[ -\sum_{i=1}^{N} \frac{\left(\mu_i n_i^a - n_i^c\right)^2}{2\left(n_i^c\right)^2} \right]$$

where the $n_i^a$, $i = 1,...,N$ are the values of the transmission spectrum of the material in the various channels, $n_i^c$, $i = 1,..., N$ are the values of the transmission spectrum of the calibration material in these same channels and $\mu_i$ is the ratio between the number of photons received in the channel $i$ in the absence of material during the calibration $\left(n_{0,i}^c\right)$ and the number of photons received in the absence of material during the measuring $\left(n_{0,i}^a\right)$ in the same channel.

8. Method for measuring the effective atomic number of a material according to claim 2, **characterised in that**, for each pair ($Z,e$) of effective atomic number belonging to a first interval and of thickness belonging to a second interval, the likelihood function V($Z,e$) is calculated using:

$$\ln\left(V(Z,e)\right) = -\mu\overline{n}^c + \sum_{i=1}^{N} n_i^a \ln\left(\mu n_i^c\right)$$

where the $n_i^a$, $i = 1,...,N$ are the values of the transmission spectrum of the material in the various channels, $n_i^c$, $i = 1,..., N$ are the values of the interpolated transmission spectrum in these same channels, $\mu$ is the ratio

between the total number of photons received in all of the channels and in the absence of material during the measuring and the total number of photons received in the same set of channels and in the absence of material during the calibration, and $\bar{n}_c$ is the total number of photons received in the same set of channels in the presence of the calibration material, during the calibration.

9.  Method for measuring the effective atomic number of a material according to claim 8, **characterised in that** the atomic number of the material is estimated as the one ($\hat{Z}_{ML}$) that maximises the likelihood function V(Z,e) on the range constituted by the Cartesian product of the first interval and the second interval.

10. Method for measuring the effective atomic number of a material according to claim 8, **characterised in that** the marginal density ($p(Z)$) of the likelihood function over said first interval is determined, by integrating the density of the likelihood function over the second interval.

11. Method for measuring the effective atomic number of a material according to claim 9, **characterised in that** the effective atomic number of the material is estimated as the one ($\hat{Z}_{marg}$) that maximises the marginal density over said first interval.

12. Method for measuring the effective atomic number of a material according to claim 9, **characterised in that** the effective atomic number of the material is estimated as the average of the effective number ($Z_{moy}$) weighted by the marginal density of the likelihood function over said first interval.

13. Method for measuring the effective atomic number of a material according to one of claims 2, 8-12, **characterised in that** for a thickness e between a first known thickness $e^c_q$ and a second known thickness $e^c_{q+1}$ where $e^c_q < e < e^c_{q+1}$, an interpolated calibration spectrum $\mathbf{S}^c(Z^c,e)$ is obtained for the effective atomic number $Z^c$ and the thickness $e$ from the calibration spectra $\mathbf{S}^c\left(Z^c,e^c_q\right)$ and $\mathbf{S}^c\left(Z^c,e^c_{q+1}\right)$ respectively obtained for the same effective atomic number and the respective thicknesses $e^c_q$ and $e^c_{q+1}$, by means of:

$$\ln\left[n^c_i\left(Z^c,e\right)\right] = \left(\frac{e^c_{q+1}-e}{e^c_{q+1}-e^c_q}\right)\ln\left[n^c_i\left(Z^c,e^c_q\right)\right] + \left(\frac{e-e^c_q}{e^c_{q+1}-e^c_q}\right)\ln\left[n^c_i\left(Z^c,e^c_{q+1}\right)\right]$$

where $n^c_i\left(Z^c,e\right)$, $n^c_i\left(Z^c,e^c_q\right)$ and $n^c_i\left(Z^c,e^c_{q+1}\right)$ are the respective values of the spectra $\mathbf{S}^c(Z^c,e)$, $\mathbf{S}^c\left(Z^c,e^c_q\right)$ and $\mathbf{S}^c\left(Z^c,e^c_{q+1}\right)$ in the channel $i$ of the spectral band.

14. Method for measuring the effective atomic number of a material according to one of claims 1, 8-13, **characterised in that** for an effective atomic number $Z$ between a first known effective atomic number $Z^c_p$ and a second known effective atomic number $Z^c_{p+1}$ where $Z^c_p < Z < Z^c_{p+1}$, an interpolated calibration spectrum $\mathbf{S}^c(Z,e^c)$ is obtained for the effective atomic number $Z$ and the thickness $e^c$ from the calibration spectra $\mathbf{S}^c\left(Z^c_p,e^c\right)$ and $\mathbf{S}^c\left(Z^c_{p+1},e^c\right)$ respectively obtained for the same thickness $e^c$ and the respective atomic numbers $Z^c_p$ and $Z^c_{p+1}$, by means of:

$$\ln\left[n^c_i\left(Z,e^c\right)\right] = \left(1 - \gamma^1_p\frac{\rho}{\rho_p} - \gamma^2_p\frac{\rho}{\rho_{p+1}}\right)\ln\left[n^c_{0,i}\right] +$$

$$\left(\gamma^1_p\frac{\rho}{\rho_p}\right)\ln\left[n^c_i\left(Z^c_p,e^c\right)\right] + \left(\gamma^2_p\frac{\rho}{\rho_{p+1}}\right)\ln\left[n^c_i\left(Z^c_{p+1},e^c\right)\right]$$

where $n_i^c\left(Z, e^c\right)$, $n_i^c\left(Z_p^c, e^c\right)$, $n_i^c\left(Z_{p+1}^c, e^c\right)$ are the respective values of the spectra $\boldsymbol{S}^c(Z, e^c)$, $\boldsymbol{S}^c\left(Z_p^c, e^c\right)$ and $\boldsymbol{S}^c\left(Z_{p+1}^c, e^c\right)$ in the channel $i$ of the spectral band, $n_{0,i}^c$ is the score of the full flow spectrum in

$$\gamma_p^1 = \frac{\left(Z_{p+1}^c\right)^r - Z^r}{\left(Z_{p+1}^c\right)^r - \left(Z_p^c\right)^r} \quad , \quad \gamma_p^2 = \frac{Z^r - \left(Z_p^c\right)^r}{\left(Z_{p+1}^c\right)^r - \left(Z_p^c\right)^r} ,$$

the channel $i$, $r$ is a predetermined real constant, $\rho_p, \rho_{p+1}$ are respectively the densities of the materials $p$ and $p+1$, and where $p$ is the density of the material of atomic number $Z$ obtained by interpolation between the densities $\rho_p$ and $\rho_{p+1}$.

acquisition des spectres de transmission $\mathbf{S}^{c}\left(Z_{p}^{c}, e_{q}^{c}\right)$

d'échantillons de calibration

de nombres atomiques effectifs $Z_{p}^{c}$, $p = 1, ..., P$

et d'épaisseurs $e_{q}^{c}$, $q = 1, ..., Q$

— 110

↓

acquisition du spectre de transmission

de l'échantillon à analyser

$$\mathbf{S^{a}} = \left(n_{1}^{a}, n_{2}^{a}, ..., n_{N}^{a}\right)^{T}$$

— 120

↓

calcul des valeurs de la fonction de vraisemblance

$$V(Z^{c}, e^{c}) = \frac{1}{\prod_{i=1}^{N} n_{i}^{c}} \exp\left[-\sum_{i=1}^{N} \frac{\left(\mu_{i} n_{i}^{a} - n_{i}^{c}\right)^{2}}{2\left(n_{i}^{c}\right)^{2}}\right]$$

— 130

↓

calcul des valeurs de vraisemblance

maximales $V_{p}$ ou marginales $V_{p}^{'}$

pour les matériaux $p = 1, ..., P$

— 140

↓

estimation barycentique de $Z$

$$\hat{Z} = \frac{\sum_{p=1}^{P} V_{p} Z_{p}^{c}}{\sum_{p=1}^{P} V_{p}} \quad \text{ou} \quad \hat{Z} = \frac{\sum_{p=1}^{P} V_{p}^{'} Z_{p}^{c}}{\sum_{p=1}^{P} V_{p}^{'}}$$

— 150

**Fig. 1**

acquisition des spectres de transmission $\mathbf{S}^c \left( Z_p^c, e_q^c \right)$

d'échantillons de calibration

de nombres atomiques effectifs $Z_p^c$, $p = 1, ..., P$

et d'épaisseurs $e_q^c$, $q = 1, ..., Q$

~210

interpolation des spectres de calibration $\mathbf{S}^c \left( Z_p^c, e_q^c \right)$

obtention des spectres de calibration interpolés $\mathbf{S}^c \left( Z, e \right)$

sur le pavé $\left[ Z_{\min,}, Z_{\max} \right] \times \left[ e_{\min,}, e_{\max} \right]$

~215

acquisition du spectre de transmission de l'échantillon

à analyser $\mathbf{S}^{\mathbf{a}} = \left( n_1^a, n_2^a, ..., n_N^a \right)^T$

~220

calcul de la fonction de vraisemblance

$\ln \left( \mathrm{V}(Z, e) \right) = -\mu \bar{n}^c + \sum_{i=1}^{N} n_i^a \ln \left( \mu n_i^c \right)$

~230

calcul de la densité marginale

de la fonction de vraisemblance $p \left( Z \right)$

~240

estimation du numéro atomique effectif

$\hat{Z}_{ML}$ ou $\hat{Z}_{\mathrm{marg}}$ ou $\hat{Z}_{moy}$

~250

**Fig. 2**

Zeff_ml = 8.52, Zeff_marg =8.42, Zeff_moy = 8.46 (Zeff = 8.57, ep = 4.5cm)

**Fig. 3A**

Zeff_marg = 8.42

**Fig. 3B**

ep_marg = 5.36

**Fig. 3C**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6069936 A

- FR 2961904